# EUROPÄISCHE PATENTANMELDUNG

(11) **EP 4 523 576 A1**
(43) Veröffentlichungstag der Anmeldung: **19.03.2025**
(21) Anmeldenummer: 24199918.4
(22) Anmeldetag: 12.09.2024
(51) Int. Cl.: A47J 31/44, A47J 31/52, A47J 31/60

(54) **VERFAHREN ZUM BETREIBEN EINER VORRICHTUNG ZUM AUFSCHÄUMEN VON MILCH SOWIE VORRICHTUNG ZUM AUFSCHÄUMEN VON MILCH**

(30) Priorität: 15.09.2023 DE 102023125035
(71) Anmelder: Wilhelm Gronbach GmbH & Co. KG, 6342 Niederndorf (AT)
(72) Erfinder: HÖCK, Florian, 83313 Siegsdorf (DE); MATHES, Anton, 83364 Neukirchen (DE)
(74) Vertreter: Hofstetter, Schurack & Partner

(57) **Zusammenfassung**

Die Erfindung betrifft ein Verfahren zum Betreiben einer Vorrichtung (10) zum Aufschäumen von Milch (20), bei welchem die Vorrichtung (20) aufweist eine Dampfquelle (12) zum Bereitstellen von Dampf zum Aufschäumen der Milch (29); ein zusätzlich zu der Dampfquelle (12) vorgesehenes Behältnis (44) zum Aufnehmen einer Flüssigkeit (46); und eine Pumpe (48), mittels welcher die Flüssigkeit (46) aus dem Behältnis (44) in die Dampfquelle (12) zu fördern ist; und wobei die Vorrichtung (10) in einem Entkalkungsmodus betrieben wird, in welchem mittels der Pumpe (48) die Flüssigkeit (46) aus dem Behältnis (44) in die Dampfquelle (12) derart gezielt gefördert wird, dass die Dampfquelle (12) vollständig mit der Flüssigkeit (46) befüllt wird.

## Beschreibung

Die Erfindung betrifft ein Verfahren zum Betreiben einer Vorrichtung zum Aufschäumen von Milch gemäß dem Oberbegriff des Patentanspruchs 1. Des Weiteren betrifft die Erfindung eine Vorrichtung zum Aufschäumen von Milch.

Der EP 1 501 398 B1 ist eine Vorrichtung zum Erhitzen und Aufschäumen von Milch, insbesondere zum Zubereiten von Cappuccinos in einer Kaffeemaschine, als bekannt zu entnehmen. Vorgesehen ist ein dampferzeugender Heißwasserbereiter. Vorgesehen sind auch Fördermittel, welche mit einem offenen Ende versehen sind, wobei die Fördermittel in ein Milch enthaltendes Gefäß getaucht werden können.

Bei aus dem allgemeinen Stand der Technik bekannten Vorrichtungen zum Aufschäumen von Milch kommt somit eine üblicherweise auch als Boiler bezeichnete oder als Boiler ausgebildete Dampfquelle zum Einsatz, mittels welcher Dampf, insbesondere in Form Wasserdampf, bereitgestellt werden kann. Nach häufiger Verwendung einer solchen Vorrichtung und somit deren Dampfquelle kann es in der Dampfquelle zur Bildung von Kalk kommen, der sich an der Dampfquelle und dabei insbesondere in deren Inneren anlagert. Ein auch als Entkalken der Dampfquelle bezeichnetes Entfernen des Kalks aus der Dampfquelle ist üblicherweise sehr zeit- und kostenaufwendig.

Aufgabe der vorliegenden Erfindung ist es daher, ein Verfahren zum Betreiben einer Vorrichtung zum Aufschäumen von Milch sowie eine Vorrichtung zum Aufschäumen von Milch bereitzustellen, sodass sich eine besonders zeit- und kostengünstige Entkalkung realisieren lässt.

Diese Aufgabe wird erfindungsgemäß durch ein Verfahren mit den Merkmalen des Patentanspruchs 1 sowie durch eine Vorrichtung mit den Merkmalen des Patentanspruchs 15 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Vorrichtung zum Aufschäumen und vorzugsweise auch zum Erhitzen von Milch. Durch das Aufschäumen der Milch kann ein durch die Milch gebildeter Milchschaum gebildet werden. Der Milchschaum kann beispielsweise zum Bereiten eines Heißgetränks wie beispielsweise eines Kaffeeheißgetränks, insbesondere eines Cappuccinos, verwendet werden. Somit ist es beispielsweise vorgesehen, dass bei dem Verfahren die Vorrichtung Bestandteil eines Getränkebereiters, insbesondere eines Heißgetränkebereiters, ist. Bei dem Verfahren weist die Vorrichtung eine Dampfquelle zum Bereitstellen von Dampf, insbesondere Wasserdampf, auf. Mit anderen Worten handelt es sich vorzugsweise bei der Dampfquelle um eine Wasserdampfquelle zum Bereitstellen von Wasserdampf. Wieder mit anderen Worten ausgedrückt ist mittels der Dampfquelle Dampf, insbesondere Wasserdampf, bereitstellbar. Bei der Dampfquelle kann es sich um einen sogenannten Boiler handeln. Insbesondere ist unter dem Boiler beispielsweise ein Dampfkessel zu verstehen. Ferner ist es denkbar, dass die Dampfquelle ein Durchlauferhitzer zum Erzeugen und Bereitstellen des Dampfs ist. Das Erzeugen des Dampfs wird auch als Dampferzeugung oder Dampfbereitstellung bezeichnet.

Beispielsweise kann die Vorrichtung bei dem Verfahren ein erstes Leitungselement aufweisen, welches von dem von der Dampfquelle bereitgestellten Dampf durchströmbar ist. Das erste Leitungselement weist ein, insbesondere offenes und ganz vorzugsweise freies, Ende auf, welches von dem das erste Leitungselement durchströmenden Dampf durchströmbar ist. Somit kann beispielsweise über das Ende des ersten Leitungselements der das erste Leitungselement durchströmende Dampf aus dem ersten Leitungselement ausströmen und hierdurch insbesondere an oder in eine Umgebung des ersten Leitungselements, insbesondere der Vorrichtung, strömen. Das offene Ende ist dabei in ein zum Aufnehmen der Milch vorgesehenes Behältnis eintauchbar oder eingetaucht. Somit kann beispielsweise zumindest ein das Ende umfassender Teil des ersten Leitungselements in das Behältnis und insbesondere in die in dem Behältnis aufgenommene Milch eingetaucht werden, insbesondere derart, dass beispielsweise das Ende unterhalb eines auch als Spiegel bezeichneten Pegels der Milch in dem Behältnis angeordnet ist. Das Behältnis kann, muss jedoch nicht notwendigerweise Bestandteil der Vorrichtung sein.

Bei dem Verfahren kann die Vorrichtung beispielsweise eine insbesondere elektrisch betreibbare Luftpumpe zum Bereitstellen von Druckluft aufweisen. Unter der Druckluft ist insbesondere Luft zu verstehen, welche beispielsweise einen auch als Luftdruck bezeichneten Druck aufweist, wobei der Druck der Luft, insbesondere gegenüber dem Atmosphärendruck, vorzugsweise größer als 1 bar, insbesondere größer als 1,5 bar und ganz insbesondere größer als 2 bar, sein kann. Insbesondere dann, wenn der Luftdruck auf den Atmosphären- beziehungsweise Umgebungsdruck bezogen wird, ist der Luftdruck ein Überdruck gegenüber dem Atmosphären- beziehungsweise Umgebungsdruck.

Bei dem Verfahren kann die Vorrichtung beispielsweise ein zweites Leitungselement aufweisen, welches von der von der Luftpumpe bereitgestellten oder bereitstellbaren Druckluft durchströmbar ist oder durchströmt wird. Über das zweite Leitungselement kann die das zweite Leitungselement durchströmende Druckluft in das erste Leitungselement und somit in den das erste Leitungselement strömenden Dampf eingeleitet werden. Hierfür ist beispielsweise das zweite Leitungselement an einer Verbindungsstelle mit dem ersten Leitungselement fluidisch verbunden oder verbindbar, sodass beispielsweise die das zweite Leitungselement durchströmende Druckluft an der Verbindungsstelle aus dem zweiten Leitungselement ausströmen und in das erste Leitungselement einströmen kann. Dabei ist es vorzugsweise vorgesehen, dass in Strömungsrichtung des das erste Leitungselement durchströmenden Dampfes die Verbindungsstelle stromauf des Endes des ersten Leitungselements und insbesondere stromab der Dampfquelle angeordnet ist. Beispielsweise kann sich ein Längenbereich des ersten Leitungselements von der Verbindungsstelle bis zu dem Ende erstrecken. Beispielsweise endet das erste Leitungselement an dem Ende, wobei es vorzugsweise vorgesehen ist, dass der Längenbereich an dem Ende endet. Da beispielsweise an der Verbindungsstelle die Druckluft aus dem zweiten Leitungselement in das erste Leitungselement und in den das erste Leitungselement durchströmenden Dampf eingeleitet werden kann, können beispielsweise der das erste Leitungselement durchströmende Dampf und die in das erste Leitungselement eingeleitete Druckluft, insbesondere gemeinsam, den genannten Längenbereich durchströmen und somit beispielsweise, insbesondere gemeinsam, von der Verbindungsstelle zu dem Ende des ersten Leitungselements strömen, das Ende des ersten Leitungselements durchströmen und somit über das Ende des ersten Leitungselements aus dem ersten Leitungselement ausströmen und hierdurch in oder an die genannte Umgebung strömen. Ist das Ende des ersten Leitungselements in die Milch eingetaucht, während der Dampf und die Druckluft das Ende durchströmen und somit über das Ende aus dem ersten Leitungselement ausströmen, so strömt der Dampf und die Druckluft, insbesondere gemeinsam, in die Milch, wodurch die Milch aufgeschäumt und insbesondere erhitzt wird. Beispielsweise weist der aus dem Ende ausströmende Dampf eine Temperatur auf, welche größer als 90 Grad Celsius ist. Insbesondere ist die Temperatur des aus dem Ende ausströmenden Dampfes größer oder gleich 100 Grad Celsius ist. Insbesondere strömt beispielsweise aus dem Ende ein Phasengemisch aus dem Dampf, Wassertröpfchen und der Druckluft aus, wobei das Phasengemisch, das aus dem Ende ausströmt, beispielsweise die genannte Temperatur aufweist, welche größer als 90 Grad Celsius ist, insbesondere größer oder gleich 100 Grad Celsius ist. Mit anderen Worten, das Ende des ersten Leitungselements ist zumindest von dem Dampf und von der Druckluft durchströmbar, um dadurch über das Ende den Dampf und die Luft in die Milch einzuleiten. Hierdurch kann die Milch aufgeschäumt werden, mithin kann hierdurch der Milchschaum erzeugt werden. Außerdem kann hierdurch die Milch erwärmt werden.

Alternativ oder zusätzlich kann die Vorrichtung eine Venturi-Düse zum Bereitstellen der Luft und/oder des Dampfers und/oder eine Dampflanzen zum Bereitstellen des Dampfes aufweisen.

Beispielsweise kann bei dem Verfahren die Vorrichtung in einem auch als Dampfmodus oder Dampfbereitstellungsmodus bezeichneten Aufschäummodus betrieben werden. In dem Aufschäummodus, das heißt während zumindest eines Teils des Aufschäummodus stellt die Dampfquelle den Dampf bereit, welcher somit beispielsweise in dem Aufschäummodus, das heißt zumindest während des Teils des Aufschäummodus, das erste Leitungselement durchströmt.

Bei dem Verfahren weist die Vorrichtung ein zusätzlich zu der Dampfquelle vorgesehenes Behältnis zum Aufnehmen einer Flüssigkeit auf. Dies bedeutet, dass die Flüssigkeit in dem Behältnis aufnehmbar oder aufgenommen ist. Wieder mit anderen Worten ausgedrückt ist es denkbar, dass bei dem Verfahren, das heißt während zumindest eines Teils des Verfahrens, die Flüssigkeit in dem Behältnis aufgenommen ist. Das Behältnis zum Aufnehmen der Flüssigkeit wird auch als zweites Behältnis bezeichnet. Wenn zuvor und im Folgenden die Rede von dem Behältnis ist, so ist darunter, falls nicht anderes angegeben ist, das zweite Behältnis zum Aufnehmen der Flüssigkeit zu verstehen. Dabei ist insbesondere die Dampfquelle ein erstes Behältnis oder die Dampfquelle wird auch als erstes Behältnis bezeichnet. Beispielsweise kann, insbesondere in dem Aufschäummodus, der Dampf in der Dampfquelle, das heißt in dem ersten Behältnis erzeugt und vorübergehend in der Dampfquelle aufgenommen werden, wobei beispielsweise der Dampf derart von der Dampfquelle bereitgestellt werden kann, dass der in der Dampfquelle erzeugte Dampf aus der Dampfquelle abgeführt, das heißt herausgeleitet und insbesondere in das erste Leitungselement eingeleitet wird. Somit ist beispielsweise das erste Leitungselement fluidisch mit der Dampfquelle verbunden oder verbindbar, sodass der in der Dampfquelle erzeugte Dampf aus der Dampfquelle abführbar und in das erste Leitungselement einleitbar ist.

Beispielsweise kann es sich in oder bei dem Aufschäummodus, das heißt dann, wenn die Pumpe in dem Aufschäummodus betrieben wird, bei der Flüssigkeit um, insbesondere flüssiges, Wasser handeln, welches, insbesondere zunächst, in flüssigem Zustand in dem Behältnis aufnehmbar oder aufgenommen ist, wobei aus dem in dem Behältnis aufgenommenen Wasser bei dem Aufschäummodus der Dampf insbesondere als Wasserdampf mittels und ganz insbesondere in der Dampfquelle erzeugt wird, welche den erzeugten Dampf insbesondere in dem Aufschäummodus dann bereitstellen kann oder bereitstellt.

Bei dem Verfahren weist die Vorrichtung eine einfach auch als Pumpe bezeichnete Flüssigkeitspumpe auf, mittels welcher die Flüssigkeit aus dem Behältnis in die Dampfquelle gefördert werden kann. Wenn zuvor und im Folgenden die Rede von der Pumpe ist, so ist darunter, falls nichts anderes angegeben ist, die Flüssigkeitspumpe zu verstehen, mittels welcher die Flüssigkeit aus dem Behältnis in die Dampfquelle gefördert werden kann. Insbesondere bei oder in dem Aufschäummodus wird mittels der Pumpe (Flüssigkeitspumpe) die insbesondere in dem Aufschäummodus als Wasser ausgebildete und zunächst in dem Behältnis in flüssigem Zustand aufgenommene Flüssigkeit aus dem Behältnis in die Dampfquelle gefördert, das heißt aus dem Behältnis herausgefördert und in die Dampfquelle hineingefördert, in und mittels welcher in und bei dem Aufschäummodus aus der mittels der Pumpe aus dem Behältnis in die Dampfquelle geförderten Flüssigkeit der Dampf erzeugt wird, der bei oder in dem Aufschäummodus von der Dampfquelle bereitgestellt wird. Insbesondere ist es vorgesehen, dass mit zunehmender, mittels der Pumpe aus dem Behältnis in die Dampfquelle geförderte Menge der Flüssigkeit eine auch als Spiegel, Flüssigkeitspegel oder Füllstand bezeichnete Pegel der Flüssigkeit in der Dampfquelle insbesondere entlang einer Richtung zunimmt. Insbesondere ist oder verläuft die Richtung in vertikaler Richtung, ganz insbesondere bezogen auf eine Gebrauchslage der Vorrichtung, die in ihrer für ihren bestimmungsgemäßen Gebrauch vorgesehenen Lage die Gebrauchslage einnimmt, mithin sich in der Gebrauchslage befindet.

Um mittels der Dampfquelle den Dampf bereitzustellen, wird beispielsweise mittels und ganz insbesondere in der Dampfquelle die in der Dampfquelle aufgenommene Flüssigkeit insbesondere zumindest auf oder über deren Siedetemperatur erwärmt, das heißt erhitzt. Durch häufigen Gebrauch der Vorrichtung und somit der Dampfquelle kann es in der Dampfquelle zu Entstehung von Kalk kommen, der sich in der Dampfquelle an dieser niederschlagen oder anlagern kann. Insbesondere ist es vorgesehen, dass die Dampfquelle eine innenumfangsseitige Mantelfläche aufweist, durch welche ein Aufnahmeraum, insbesondere direkt, begrenzt ist, wobei mittels der Pumpe die Flüssigkeit aus dem Behältnis in den Aufnahmeraum und somit in die Dampfquelle hineinförderbar ist. Somit ist die Flüssigkeit in dem Aufnahmeraum aufnehmbar oder insbesondere in oder bei dem Aufschäummodus aufgenommen. Dabei kann sich der Kalk insbesondere an der innenumfangsseitigen Mantelfläche anlagern. Das Anlagern des Kalks in und an der Dampfquelle wird auch als Verkalken oder Verkalkung der Dampfquelle bezeichnet. Üblicherweise ist ein Entfernen des Kalks von und aus der Dampfquelle ein sehr zeit- und kostenaufwendiger Vorgang, für welchen beispielsweise die Vorrichtung von einem Nutzer oder einer Nutzerin zu einer gegebenenfalls weit entfernten Wartungsstation geschickt werden muss, an oder in welcher die Vorrichtung aufwendig demontiert wird, woraufhin die Dampfquelle entkalkt wird. Daraufhin wird die Vorrichtung wieder zusammengebaut und zurück zu dem Nutzer oder der Nutzerin geschickt. Das zumindest teilweise Entfernen des Kalks von und aus der Dampfquelle wird auch als Entkalken oder Entkalkung bezeichnet, wobei bei dem Entkalken der Kalk beispielsweise von der innenumfangsseitigen Mantelfläche und aus der Dampfquelle entfernt wird. Insbesondere ist im Rahmen der vorliegenden Offenbarung unter dem auch als Entkalkung bezeichneten Entkalken der Dampfquelle zu verstehen, dass an die innenumfangsseitige Mantelfläche angelagerter und somit in und an der Dampfquelle angelagerter Kalk, der sich zunächst in dem Aufnahmeraum befindet, zumindest teilweise von der innenumfangsseitigen Mantelfläche und somit von der Dampfquelle gelöst und aus der Dampfquelle, das heißt aus dem Aufnahmeraum entfernt wird.

Um nun die Dampfquelle, insbesondere die innenumfangsseitige Mantelfläche, besonders zeit- und kostengünstig und besonders umfänglich, das heißt besonders großflächig entkalken zu können, ohne dass die Vorrichtung von einer Person zeit- und kostenaufwendig auseinandergebaut und daraufhin wieder zusammengebaut werden muss, ist es erfindungsgemäß vorgesehen, dass bei dem Verfahren die Vorrichtung in einem Entkalkungsmodus betrieben wird. Beispielsweise schließt sich der Entkalkungsmodus zeitlich an dem Aufschäummodus an, oder der Entkalkungsmodus geht dem Aufschäummodus zeitlich vorweg. Beispielsweise wird mittels wenigstens eines Bedienelements der Vorrichtung eine durch eine Person bewirkte Bedienung des Bedienelements erfasst, wobei in Abhängigkeit von dem Erfassen der durch die Person bewirkten Bedienung des Bedienelements die Vorrichtung in dem Entkalkungsmodus betrieben, mithin der Entkalkungsmodus gestartet wird. In und somit bei dem Entkalkungsmodus wird mittels der Pumpe die Flüssigkeit aus dem Behältnis in die Dampfquelle, das heißt in den Aufnahmeraum derart gezielt gefördert, dass die Dampfquelle, das heißt der Aufnahmeraum vollständig mit der Flüssigkeit befüllt wird. Dies bedeutet, dass in oder bei dem Entkalkungsmodus, das heißt während zumindest eines Teils des Entkalkungsmodus die Flüssigkeit in dem Behältnis aufgenommen wird. Unter dem Merkmal, dass bei dem Verfahren mittels der Pumpe die Flüssigkeit aus dem Behältnis in die Dampfquelle derart gezielt gefördert wird, dass die Dampfquelle vollständig mit der Flüssigkeit befüllt wird, ist zu verstehen, dass das mittels der Pumpe bewirkte, das heißt das aus dem mittels der Pumpe bewirkten Fördern der Flüssigkeit aus dem Behältnis in die Dampfquelle resultierende, vollständige Befüllen der Dampfquelle mit der Flüssigkeit ein technisch gezielter, das heißt bewusst oder gewünscht herbeigeführter und somit nicht etwa zufällig oder willkürlich erfolgender Vorgang ist, welcher insbesondere durch Ansteuern, insbesondere Regeln oder Steuern, der Pumpe durchgeführt wird. Insbesondere ist vorgesehen, dass in oder bei dem Entkalkungsmodus, das heißt zumindest während des Teils des Entkalkungsmodus die Flüssigkeit eine einfach auch als Entkalker bezeichnete Entkalkungsflüssigkeit ist, welche beispielsweise Wasser und wenigstens einen auch als additiv bezeichneten Zusatz aufweist, welcher dazu ausgebildet ist, den in und an der Dampfquelle, das heißt an der innenumfangsseitigen Mantelfläche angelagerten Kalk von der Dampfquelle, das heißt von der innenumfangsseitigen Mantelfläche zu lösen. Erfindungsgemäß ist es somit vorgesehen, dass die Pumpe in ihrem vollständig zusammengebauten Zustand in dem Entkalkungsmodus betreibbar ist und betrieben wird, wobei bei dem Entkalkungsmodus die Dampfquelle vollständig mit der Flüssigkeit aus dem Behältnis befüllt wird. Hierdurch kann der Entkalker an die zumindest nahezu gesamte innenumfangsseitige Mantelfläche gelangen, mithin die zumindest nahezu gesamte innenumfangsseitige Mantelfläche direkt berühren, wodurch die Dampfquelle insbesondere innenumfangsseitig besonders großflächig entkalkt werden kann, ohne die Vorrichtung auseinanderbauen zu müssen. Dadurch, dass bei dem Entkalkungsmodus die Dampfquelle vollständig mit der Flüssigkeit aus dem Behältnis befüllt wird, steigt der sich in dem Entkalkungsmodus in dem Behältnis ausbildende Pegel der Flüssigkeit insbesondere entlang der zuvor genannten Richtung betrachtet bis zu einem einfach auch als Ende bezeichneten Quellenende der Dampfquelle, die, insbesondere entlang der Richtung betrachtet, an dem Quellenende endet, sodass in dem Entkalkungsmodus der sich in dem Entkalkungsmodus bildende Pegel der Flüssigkeit in der Dampfquelle insbesondere entlang der Richtung betrachtet wesentlich höher ansteigt als in dem Aufschäummodus.

Wird, insbesondere nachdem in dem Entkalkungsmodus die Dampfquelle vollständig mit der Flüssigkeit befüllt wurde, in dem Entkalkungsmodus die in dem Entkalkungsmodus beispielsweise als Entkalker ausgebildete Flüssigkeit aus der Dampfquelle entfernt, sondern hierdurch die Dampfquelle besonders vorteilhaft entkalkt werden.

Um die Dampfquelle besonders vorteilhaft entkalken zu können, ist es bei einer Ausführungsform der Erfindung vorgesehen, dass in dem Entkalkungsmodus mittels der Pumpe die Flüssigkeit aus dem Behältnis in die Dampfquelle mehrmals aufeinanderfolgend derart gezielt gefördert wird, dass die Dampfquelle mehrmals aufeinanderfolgend vollständig mit der Flüssigkeit befüllt wird. Somit werden beispielsweise in dem Entkalkungsmodus mehrere, das heißt wenigstens zwei oder mehr als zwei Befüllvorgänge zeitlich aufeinander durchgeführt, wobei bei dem jeweiligen, in dem Entkalkungsmodus durchgeführten Befüllvorgang mittels der Pumpe die Flüssigkeit aus dem Behältnis in die Dampfquelle mehrmals aufeinanderfolgend derart gezielt gefördert wird, dass die Dampfquelle bei dem jeweiligen Befüllvorgang vollständig mit der Flüssigkeit befüllt wird. Dabei ist es vorzugsweise vorgesehen, dass in dem Entkalkungsmodus zwischen den jeweils zwei zeitlich aufeinanderfolgenden Befüllvorgängen wenigstens oder genau ein Abführvorgang durchgeführt wird, bei welchem die Flüssigkeit, insbesondere gezielt, zumindest teilweise aus der Dampfquelle abgeführt wird.

Das mehrmalige, zeitlich aufeinanderfolgende, vollständige Befüllen der Dampfquelle ist auch insofern vorteilhaft, dass beispielsweise dann, wenn mittels des Entkalkers der Kalk von der Dampfquelle, das heißt von der innenumfangsseitigen Mantelfläche, Kohlendioxid (CO₂) entstehen kann, woraus resultierten kann, dass zumindest ein Teil des Entkalkers aus der Dampfquelle ausgetrieben wird, ohne dass dies gezielt herbeigeführt wird. Durch insbesondere darauffolgendes, erneutes gezieltes vollständiges Befüllen der Dampfquelle mit der Flüssigkeit kann eine besonders gute Entkalkung der Dampfquelle sichergestellt werden.

Eine weitere Ausführungsform zeichnet sich dadurch aus, dass in dem Entkalkungsmodus und dabei vorzugsweise bei dem Befüllvorgang mittels der Pumpe die Flüssigkeit aus dem Behältnis in die Dampfquelle derart gezielt gefördert wird, dass die Dampfquelle mit der Flüssigkeit überfüllt wird, sodass die mittels der Pumpe in die Dampfquelle geförderte Flüssigkeit über einen beispielsweise an dem Quellenende angeordneten oder das Quellenende bildenden Rand der Dampfquelle strömt und dadurch aus der Dampfquelle herausströmt. Hierdurch kann ein vollständiges Befüllen der Dampfquelle sichergestellt werden, wodurch die Dampfquelle besonders vorteilhaft entkalkt werden kann.

Bei einer weiteren, besonders vorteilhaften Ausführungsform der Erfindung ist es vorgesehen, dass in dem Entkalkungsmodus mittels der Pumpe die Flüssigkeit aus dem Behältnis in die Dampfquelle mehrmals aufeinanderfolgend derart gezielt gefördert wird, das heißt dass die zeitlich aufeinanderfolgenden Befüllvorgänge derart durchgeführt werden, dass die Dampfquelle mit der Flüssigkeit mehrmals aufeinanderfolgend überfüllt wird, sodass die mittels der Pumpe in die Dampfquelle geförderte Flüssigkeit mehrmals aufeinanderfolgend über den Rand der Dampfquelle strömt und dadurch mehrmals aufeinanderfolgend aus der Dampfquelle herausströmt. Dies bedeutet, dass bei dem jeweiligen Befüllvorgang, welche in dem Entkalkungsmodus durchgeführt wird, mittels der Pumpe die Flüssigkeit aus dem Behältnis in die Dampfquelle derart gezielt gefördert wird, dass bei dem jeweiligen Befüllvorgang die Dampfquelle mit der Flüssigkeit überfüllt wird, sodass bei dem jeweiligen Befüllvorgang die mittels der Pumpe in die Dampfquelle geförderte Flüssigkeit über den Rand und somit über das Quellenende der Dampfquelle strömt und dadurch aus der Dampfquelle herausströmt. Dadurch kann die Dampfquelle besonders effektiv und effizient sowie zeit- und kostengünstig entkalkt werden.

Eine weitere Ausführungsform zeichnet sich dadurch aus, dass in wenigstens einem von dem Entkalkungsmodus unterschiedlichen und zum Bereitstellen des Dampfes vorgesehenen Betriebsmodus der Vorrichtung, insbesondere in allen von dem Entkalkungsmodus unterschiedlichen und zum Bereitstellen des Dampfes vorgesehenen Betriebsmodi der Vorrichtung, ein mittels der Pumpe gezielt bewirktes, derartiges Fördern der Flüssigkeit aus dem Behältnis in die Dampfquelle unterbleibt, dass die Dampfquelle mit der Flüssigkeit aus dem Behältnis vollständig befüllt wird. Insbesondere handelt es sich beispielsweise bei dem zuvor genannten Betriebsmodus um den zuvor genannten Aufschäummodus. Somit ist es vorzugsweise vorgesehen, dass die Dampfquelle vorzugsweise nur in dem Entkalkungsmodus vollständig mit der Flüssigkeit befüllt wird, in dem Betriebsmodus, insbesondere in dem Aufschäummodus, unterbleibt ein vollständiges Befüllen der Dampfquelle mit der Flüssigkeit aus dem Behältnis, wodurch der Dampf besonders vorteilhaft erzeugt und bereitgestellt werden kann. Somit steigt beispielsweise der sich in dem Betriebsmodus ausbildende Pegel der Flüssigkeit in dem Behältnis höchstens bis zu einer Stelle, die insbesondere entlang der Richtung betrachtet von dem Rand und somit von dem Quellenende entfernt ist und dabei insbesondere unter dem Rand beziehungsweise unter dem Quellenende angeordnet ist. Ein sich insbesondere entlang der Richtung von der Stelle bis zu dem Quellenende beziehungsweise bis zu dem Rand erstreckender Bereich der Dampfquelle, das heißt des Aufnahmeraums ist frei von Flüssigkeit, sodass sich insbesondere in dem Aufschäummodus in dem Bereich der Dampf sammelt, das heißt zunächst aufgenommen werden kann. Dabei kommt es insbesondere in dem Bereich zu einer Verkalkung der Dampfquelle. Dadurch, dass in dem Entkalkungsmodus die Dampfquelle vollständig mit der Flüssigkeit befüllt wird, gelangt in dem Entkalkungsmodus die Flüssigkeit, mithin der Entkalker auch in den Bereich, wodurch die Dampfquelle besonders umfangreich entkalkt werden kann und das besonders zeit- und kostengünstig.

In weiterer Ausgestaltung der Erfindung weist die Vorrichtung wenigstens ein, insbesondere zumindest teilweise an und/oder in der Dampfquelle, insbesondere dem Aufnahmeraum, angeordnetes, Erfassungselement zum Erfassen einer Menge der mittels der Pumpe aus dem Behältnis in die Dampfquelle geförderten Flüssigkeit auf. Beispielsweise ist oder umfasst das Erfassungselement eine Elektrode. Dabei ist es vorzugsweise vorgesehen, dass in dem Entkalkungsmodus mittels der Pumpe die Flüssigkeit aus dem Behältnis in die Dampfquelle derart gezielt gefördert wird, dass der durch die mittels der Pumpe aus dem Behältnis in die Dampfquelle geförderte Flüssigkeit gebildete Pegel der Flüssigkeit in der Dampfquelle insbesondere entlang der Richtung betrachtet über zumindest einen Teil, insbesondere über zumindest einen überwiegenden Teil und somit über zumindest mehr als die Hälfte, des Erfassungselements hinweg ansteigt und die Dampfquelle vollständig mit der Flüssigkeit befüllt wird. Hierdurch kann die Dampfquelle auf besonders zeit- und kostengünstige Weise besonders umfangreich entkalkt werden.

Um in dem Entkalkungsmodus die Dampfquelle sicher zumindest vollständig befüllen oder gar überfüllen zu können, ist es in weiterer Ausgestaltung der Erfindung vorgesehen, dass in dem Entkalkungsmodus und während in dem Entkalkungsmodus die Pumpe die Flüssigkeit aus dem Behältnis in die Dampfquelle fördert, mittels eines Durchflusssensors eine Messgröße erfasst wird, welche eine mittels der Pumpe bewirkte Strömung der aus dem Behältnis in die Dampfquelle strömenden Flüssigkeit charakterisiert. Die Messgröße ist ein Durchfluss der mittels der Pumpe geförderten Flüssigkeit oder die Messgröße wird auch als Durchfluss bezeichnet. Ganz insbesondere ist die Messgröße beispielsweise ein Volumenstrom oder ein Massenstrom. Insbesondere ist die Messgröße ein Volumenstrom oder ein Massenstrom der mittels der Pumpe geförderten Flüssigkeit. Ferner ist es vorgesehen, dass in dem Entkalkungsmodus mittels der Pumpe die Flüssigkeit aus dem Behältnis in die Dampfquelle in Abhängigkeit von der mittels des Durchflusssensors erfassten Messgröße derart gezielt gefördert wird, dass die Dampfquelle vollständig mit der Flüssigkeit befüllt wird.

Um die Dampfquelle besonders zeit- und kostengünstig entkalken zu können, ist es in weiterer Ausgestaltung der Erfindung vorgesehen, dass in dem Entkalkungsmodus ab einem Zeitpunkt, zu welchem der Pegel der Flüssigkeit in dem Behältnis auf gleicher Höhe wie der Teil des Erfassungselements ist und hierdurch das Erfassungselement den Pegel der Flüssigkeit im Behältnis erfasst, die Pumpe noch eine vorgegebene und beispielsweise in einem insbesondere elektrischen oder elektronischen Datenspeicher gespeicherte Zeitspanne, insbesondere weiter, betrieben wird, insbesondere unabhängig eines mittels eines Durchflusssensors gemessenen Durchflusses der mittels der Pumpe geförderten Flüssigkeit, wodurch mittels der Pumpe insbesondere unabhängig von einem mittels eines Durchflusssensors gemessenen Durchfluss der mittels der Pumpe geförderten Flüssigkeit die Flüssigkeit während der Zeitspanne aus dem Behältnis in die Dampfquelle gefördert und der Pegel zumindest über den Teil des Erfassungselements hinweg ansteigt, insbesondere entlang der Richtung betrachtet.

Dabei hat es sich zur Realisierung einer besonders zeit- und kostengünstigen sowie besonders umfangreichen Entkalkung der Dampfquelle als besonders vorteilhaft gezeigt, wenn in dem Entkalkungsmodus die Pumpe die Flüssigkeit aus dem Behältnis in die Dampfquelle fördert, ohne dass mittels eines Durchflusssensors eine Messgröße erfasst wird, welche eine mittels der Pumpe bewirkte Strömung der aus dem Behältnis in die Dampfquelle strömenden Flüssigkeit charakterisiert. Mit anderen Worten ist vorzugsweise vorgesehen, dass in dem Entkalkungsmodus die Pumpe die Flüssigkeit aus dem Behältnis in die Dampfquelle fördert, ohne dass mittels eines Durchflusssensors ein mittels der Pumpe bewirkter Volumen- oder Massenstrom der mit der Pumpe geförderten Flüssigkeit gemessen wird.

Ganz vorzugsweise ist die Zeitspanne in einem insbesondere elektrischen oder elektronischen Datenspeicher einer elektronischen Recheneinrichtung, insbesondere der Vorrichtung, gespeichert. Vorzugsweise wird das Verfahren mittels der elektronischen Recheneinrichtung durchgeführt, sodass insbesondere der Entkalkungsmodus mittels der elektronischen Recheneinrichtung gespeichert wird. Dabei ist es insbesondere vorgesehen, dass die elektronische Recheneinrichtung zumindest in dem Entkalkungsmodus die Pumpe ansteuert.

Um die Dampfquelle besonders zeit- und kostengünstig sowie besonders umfangreich entkalken zu können, ist es in weiterer Ausgestaltung der Erfindung vorgesehen, dass die Zeitspanne für jede Durchführung des Entkalkungsmodus konstant ist.

Bei einer weiteren, besonders vorteilhaften Ausführungsform der Erfindung ist es vorgesehen, dass nachdem die Dampfquelle in dem Entkalkungsmodus vollständig mit der Flüssigkeit befüllt, insbesondere überfüllt, wurde, in dem Entkalkungsmodus die Flüssigkeit, insbesondere gezielt, aus der Dampfquelle abgeführt wird, wodurch in dem Entkalkungsmodus die Dampfquelle zumindest überwiegend und somit zumindest zu mehr als Hälfte, insbesondere vollständig, im Hinblick auf die Flüssigkeit entleert wird, woraufhin in dem Entkalkungsmodus mittels der Pumpe die Flüssigkeit wieder aus dem Behältnis in die Dampfquelle derart gezielt gefördert wird, dass die Dampfquelle wieder vollständig mit der Flüssigkeit befüllt, insbesondere überfüllt, wird. Hierdurch kann beispielsweise nach dem vollständigen Befüllen der Dampfquelle mit der Flüssigkeit die Dampfquelle mit der Flüssigkeit gespült werden, sodass beispielsweise der Entkalker mittels Wasser, insbesondere vollständig, aus der Dampfquelle ausgespült werden kann.

Dadurch kann die Dampfquelle besonders zeit- und kostengünstig sowie auf besonders vorteilhafte Weise entkalkt werden.

Um die Dampfquelle besonders effektiv und effizient sowie auf besonders zeit- und kostengünstige Weise entkalken zu können, ist es in weiterer Ausgestaltung der Erfindung vorgesehen, dass nachdem die Dampfquelle in dem Entkalkungsmodus vollständig mit der Flüssigkeit befüllt wurde, in dem Entkalkungsmodus die Flüssigkeit derart, insbesondere gezielt, aus der Dampfquelle abgeführt wird, dass die Flüssigkeit in der Dampfquelle auf über 100 Grad Celsius erwärmt wird, wodurch aus der Flüssigkeit in der Dampfquelle Dampf mit einem Dampfdruck erzeugt wird, mittels welchem die Flüssigkeit über wenigstens oder genau eine Öffnung der Dampfquelle, insbesondere gezielt, aus der Dampfquelle ausgetrieben wird.

Eine weitere Ausführungsform zeichnet sich dadurch aus, dass die Vorrichtung als ein Bestandteil eines Getränkebereiters, insbesondere eines Heißgetränkebereiters und ganz insbesondere einer Kaffeemaschine, betrieben wird, wodurch sich eine besonders zeit- und kostengünstige Entkalkung darstellen lässt.

Ein zweiter Aspekt der Erfindung betrifft eine Vorrichtung zum Aufschäumen von Milch, wobei die Vorrichtung zum Durchführen eines Verfahrens gemäß dem ersten Aspekt der Erfindung ausgebildet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Beispielsweise wird, insbesondere in dem Aufschäummodus, der Dampf mittels und in der Dampfquelle derart erzeugt, dass in dem Aufschäummodus die Flüssigkeit in der Dampfquelle auf, insbesondere wenigstens, 130 Grad Celsius erwärmt ist, wobei vorzugsweise die Dampfquelle, das heißt der Aufnahmeraum in dem Aufschäummodus höchstens zu 50% mit der Flüssigkeit befüllt ist. Somit kann sich in dem Aufschäummodus an die in der Dampfquelle aufgenommene Flüssigkeit insbesondere entlang der Richtung und ganz insbesondere nach oben betrachtet der zuvor genannte Bereich anschließen, in welchem der Dampf vorübergehend aufgenommen werden kann. Der erfindungsgemäße Entkalkungsmodus ermöglicht es nun, die beispielsweise als Dampfboiler ausgebildete oder auch als Dampfboiler bezeichnete Dampfquelle auch in dem zuvor genannten Bereich zu entkalken, welcher in dem Aufschäummodus frei von der Flüssigkeit ist. Hierzu wird, abweichend von dem auch als Normalbetrieb bezeichneten Aufschäummodus, die Dampfquelle vollständig mit der Flüssigkeit befüllt, sodass in dem Entkalkungsmodus die Flüssigkeit auch in den zuvor genannten Bereich gelangt. Somit kann auch der Bereich entkalkt werden. Mit anderen Worten erfolgt in dem Entkalkungsmodus bewusst eine vollständige Füllung oder gar Überfüllung der Dampfquelle mit der Flüssigkeit, wobei es vorzugsweise vorgesehen ist, dass in dem Entkalkungsmodus die vollständige Befüllung, insbesondere die Überfüllung, der Dampfquelle mit der Flüssigkeit mehrfach zeitlich aufeinanderfolgend durchgeführt wird. Während des Entkalkungsmodus kann in der Dampfquelle Kohlendioxid entstehen, durch welches beispielsweise in dem Entkalkungsmodus die Flüssigkeit insbesondere über ein Dampfventil und/oder die zuvor genannten Öffnung aus der Dampfquelle ausgetrieben wird, woraufhin die Dampfquelle nicht mehr vollständig mit der Flüssigkeit gefüllt ist, sondern nur beispielsweise zu ca. 95% bis 98%. Um den nahezu gesamten Innenraum entkalken zu können, wird das Befüllen oder gar Überfüllen der Dampfquelle in dem Entkalkungsmodus zeitlich mehrmals aufeinanderfolgend durchgeführt, sodass beispielsweise durch das Entstehen des Kohlendioxids aus der Dampfquelle ausgetriebene Flüssigkeit ersetzt, das heißt nachgefüllt werden kann. Ferner ermöglicht beispielsweise die Erfindung, den Entkalker insbesondere mit frischen Wasser auszuwaschen. Hier wird beispielsweise die Dampfquelle in dem Entkalkungsmodus mit der Flüssigkeit vollständig befüllt oder gar überfüllt. Das Auswaschen des Entkalkers aus der Dampfquelle wird beispielsweise so durchgeführt, dass die Dampfquelle mit der vorzugsweise als Frischwasser ausgebildeten Flüssigkeit vollständig gefüllt oder gar überfüllt und daraufhin im Hinblick auf die Flüssigkeit vollständig entleert wird, was beispielsweise durch das zuvor beschriebene Austreiben der Flüssigkeit über die Öffnung erfolgt. Diese vollständige Befüllung oder Überfüllung und die daran anschließende, insbesondere vollständige Entleerung zum Spülen der Dampfquelle wird beispielsweise mehrmals und dabei zwei bis drei Mal aufeinanderfolgend durchgeführt, um sicherzustellen, dass eine übermäßige Menge des Entkalkers in der Dampfquelle zurückbleibt.

Ganz vorzugsweise handelt es sich bei dem Heißgetränkebereiter, insbesondere bei der Kaffeemaschine, um eine Siebträgermaschine.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung einer Vorrichtung zum Aufschäumen von Milch; und
- Fig. 2: eine schematische Schnittansicht einer Dampfquelle der Vorrichtung.

In den Figuren sind gleiche oder funktionsgleiche Elemente mit gleichen Bezugszeichen versehen.

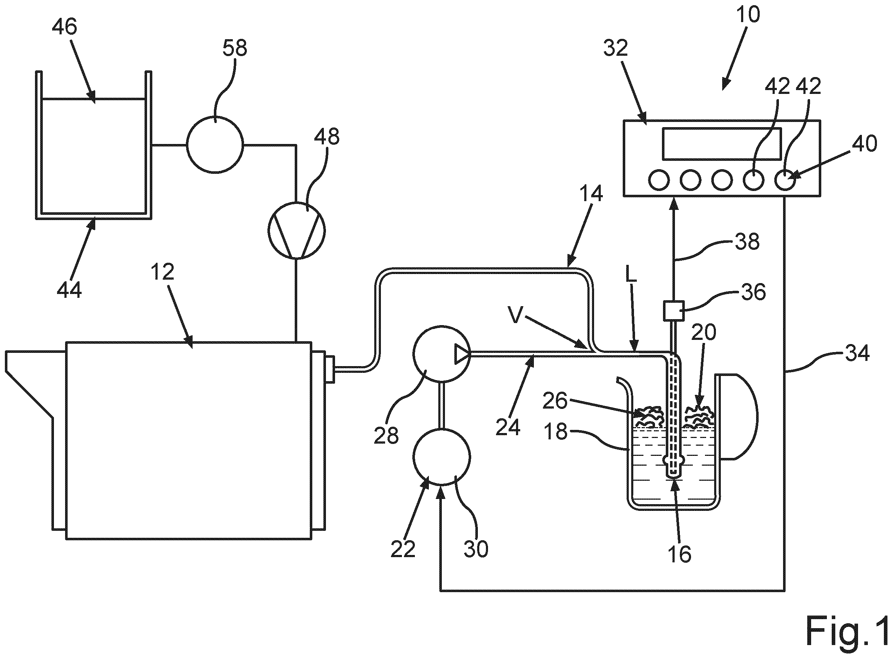

Fig. 1 zeigt in einer schematischen Darstellung eine Vorrichtung 10 zum Aufschäumen von Milch, mithin zum Erzeugen oder Herstellen von Milchschaum aus der genannten Milch. Die Vorrichtung 10 weist eine Dampfquelle 12 zum Bereitstellen von Dampf, insbesondere Wasserdampf, auf. Beispielsweise ist die Dampfquelle 12 ein einfach auch als Boiler bezeichneter Dampfkessel oder ein Durchlauferhitzer zur Dampferzeugung. Die Vorrichtung 10 weist ein erstes Leitungselement 14 auf, welches von dem Dampf, mithin von dem von der Dampfquelle 12 bereitgestellten oder bereitstellbaren Dampf, durchströmbar ist. Das erste Leitungselement 14 weist ein, insbesondere offenes, Ende 16 auf, welches in ein zum Aufnehmen der Milch vorgesehenes und beispielsweise als Kanne, insbesondere als Milchkanne, ausgebildetes Behältnis 18 eintauchbar ist. In Fig. 1 ist in dem Behältnis 18 die in Fig. 1 besonders schematisch dargestellte und mit 20 bezeichnete Milch aufgenommen, wobei in Fig. 1 das Ende 16 des ersten Leitungselements 14 in das Behältnis 18 und dabei in die Milch 20, die in dem Behältnis 18 aufgenommen ist, eingetaucht ist. Das Ende 16 des ersten Leitungselements 14 ist von dem Dampf durchströmbar, sodass über das Ende 16 der Dampf in die Milch 20 einleitbar ist oder eingeleitet wird.

Die Vorrichtung 10 weist auch eine elektrisch betreibbare Luftpumpe 22 auf, welche auch einfach als Luftpumpe oder Pumpe bezeichnet wird. Mittels der Luftpumpe 22 ist oder wird Druckluft, die einfach auch als Luft bezeichnet wird, bereitstellbar oder bereitgestellt. Die Vorrichtung 10 weist außerdem ein zweites Leitungselement 24 auf, welches von der von der Luftpumpe 22 bereitstellbaren oder bereitgestellten Druckluft durchströmbar ist oder durchströmt wird. Über das zweite Leitungselement 24 ist oder wird die Druckluft in das erste Leitungselement 14 einleitbar oder eingeleitet. Hierzu ist das zweite Leitungselement 24 an einer Verbindungsstelle V fluidisch mit dem ersten Leitungselement 14 verbunden oder verbindbar. Aus Fig. 1 ist erkennbar, dass ein sich von der Verbindungsstelle V, insbesondere durchgängig, zu dem Ende 16 erstreckender und das Ende 16 aufweisender Längenbereich L des ersten Leitungselements 14 von dem Dampf aus der Dampfquelle 12 und von der mittels der Luftpumpe 22 geförderten Druckluft durchströmbar ist. Außerdem ist erkennbar, dass das Leitungselement 14 und der Längenbereich L an dem Ende 16 enden. Somit ist das Ende 16 sowohl von dem Dampf als auch von der Druckluft durchströmbar, sodass über das Ende 16 sowohl der Dampf als auch die Druckluft in die Milch 20 eingeleitet werden oder einleitbar sind, um dadurch den in Fig. 1 mit 26 bezeichneten Milchschaum zu erzeugen, mithin herzustellen. Mit anderen Worten ist das Ende 16 sowohl von dem Dampf als auch von der Druckluft durchströmbar, um dadurch über das Ende 16 den Dampf und die Druckluft in die Milch 20 einzuleiten und in der Folge den Milchschaum 26 zu erzeugen, mithin herzustellen.

Bei dem in Fig. 1 gezeigten Ausführungsbeispiel weist die Luftpumpe 22 beispielsweise ein Förderelement 28 auf, welches beispielsweise in einem in Fig. 1 nicht näher dargestellten, auch als Gehäuse bezeichneten Pumpengehäuse der Luftpumpe 22 bewegbar aufgenommen ist. Dies bedeutet, dass das Förderelement 28 relativ zu dem Pumpengehäuse bewegbar ist. Durch relativ zu dem Pumpengehäuse erfolgendes Bewegen des Förderelements 28 ist oder wird mittels der Luftpumpe 22 die Druckluft bereitgestellt. Die Luftpumpe 22 weist außerdem einen einfach auch als Motor bezeichneten Elektromotor 30 auf, mittels welchem das Förderelement 28 antreibbar und dadurch relativ zu dem Pumpengehäuse bewegbar ist, um dadurch die Druckluft zu fördern und bereitzustellen. Der Elektromotor 30 ist elektrisch betreibbar, sodass durch elektrisches Betreiben des Elektromotors 30 die Luftpumpe 22 elektrisch betrieben und das Förderelement 28 elektrisch angetrieben wird. Hierdurch wird die Druckluft bereitgestellt. Der Elektromotor 30 weist beispielsweise einen Stator und einen Rotor auf, welcher insbesondere durch elektrisches Betreiben des Elektromotors 30 mittels des Schalters antreibbar und dadurch um eine Maschinendrehachse relativ zu dem Stator drehbar ist oder gedreht wird. Somit kann der Rotor durch Antreiben des Rotors mit einer jeweiligen Drehzahl um die Maschinendrehachse relativ zu dem Stator und insbesondere relativ zu dem Pumpengehäuse gedreht werden. Die Luftpumpe 22 kann eine beispielsweise als Volumen- und/oder Massenstrom ausgebildete Menge der das Leitungselement 24 durchströmenden Druckluft erzeugen, das heißt bewirken. Außerdem kann beispielsweise die Luftpumpe 22 einen auch als Luftdruck bezeichneten Druck der Druckluft bewirken, das heißt erzeugen. Die Menge und/oder der Luftdruck hängen dabei beispielsweise von der Drehzahl des Rotors, mithin der Luftpumpe 22, ab.

Um nun den Milchschaum 26 auf besonders einfache und insbesondere komfortable Weise erzeugen, mithin herstellen, zu können, weist die Vorrichtung 10 eine auch als Steuergerät bezeichnete, elektronische Recheneinrichtung 32 auf, welche dazu ausgebildet ist, die Luftpumpe 22, insbesondere elektrisch, anzusteuern und dadurch einen Betrieb der Luftpumpe 22 zu variieren, um hierdurch die Menge der das zweite Leitungselement 24 durchströmenden Druckluft und/oder den Druck der Druckluft in wenigstens einem der Leitungselemente 14, 24, insbesondere dem zweiten Leitungselement 24, zu variieren. Das, insbesondere elektrische, Ansteuern der Luftpumpe 22 durch die elektronische Recheneinrichtung 32 ist in Fig. 1 durch einen Pfeil 34 veranschaulicht. Beispielsweise kann die Recheneinrichtung 32 wenigstens ein, insbesondere elektrisches, auch als Ansteuersignal bezeichnetes Signal bereitstellen, mittels welchem die Luftpumpe 22 ansteuerbar ist oder angesteuert wird. Insbesondere kann die Luftpumpe 22 das Ansteuersignal empfangen, wodurch die elektronische Recheneinrichtung 32 mittels des Ansteuersignals die Luftpumpe 22 ansteuern, insbesondere regeln, kann. Beispielsweise kann die elektronische Recheneinrichtung 32 durch das Ansteuern der Luftpumpe 22 eine Versorgung der Luftpumpe 22, insbesondere des Elektromotors 30, mit einer beispielsweise als elektrische Gleichspannung ausgebildeten, elektrischen Spannung variieren, um dadurch den Betrieb der Luftpumpe 22 zu variieren. Ferner ist es denkbar, dass die elektronische Recheneinrichtung 32 die Luftpumpe 22 mittels Pulsweitenmodulation ansteuern kann, um dadurch den Betrieb der Luftpumpe 22 zu variieren. Insbesondere kann beispielsweise die elektronische Recheneinrichtung 32 durch das Ansteuern der Luftpumpe 22 die Drehzahl der Luftpumpe 22 und dadurch den Betrieb der Luftpumpe 22 variieren. Vorzugsweise ist die Luftpumpe 22 eine von einer Zahnradpumpe, von einer Turbine und von einem Rotationsverdichter unterschiedliche Luftpumpe, wobei vorzugsweise die Luftpumpe 22 als eine Kolbenpumpe oder als eine Membranpumpe ausgebildet ist. Ganz vorzugsweise ist die elektronische Recheneinrichtung 32 dazu ausgebildet, die Luftpumpe 22 durch das Ansteuern der Luftpumpe 22 mittels eines geschlossenen Regelkreises zu regeln und dadurch den Betrieb der Luftpumpe 22 zu variieren.

Die Vorrichtung 10 weist beispielsweise eine in Fig. 1 besonders schematisch dargestellte Sensoreinrichtung 36 auf, mittels welcher beispielsweise der auch als Luftdruck bezeichnete Druck der Druckluft in dem Leitungselement 14, insbesondere in dem Längenbereich L, und/oder in dem Leitungselement 24 erfasst, das heißt gemessen, werden kann. Alternativ oder zusätzlich kann beispielsweise mittels der Sensoreinrichtung 36 die auch als Luftmenge bezeichnete Menge der das Leitungselement 24 und/oder das Leitungselement 14, insbesondere den Längenbereich L, durchströmenden Luft erfasst, das heißt gemessen, werden. In Fig. 1 ist durch einen Pfeil 38 schematisch veranschaulicht, dass beispielsweise die Sensoreinrichtung 36 ein, insbesondere elektrisches, Messsignal bereitstellen kann. Das Messsignal charakterisiert beispielsweise den mittels der Sensoreinrichtung 36 gemessenen Druck und/oder die mittels der Sensoreinrichtung 36 gemessene Menge. Die elektronische Recheneinrichtung 32 kann das Messsignal empfangen. In der Folge kann beispielsweise die elektronische Recheneinrichtung 32 die Luftpumpe 22 in Abhängigkeit von dem Messsignal, mithin in Abhängigkeit von dem gemessenen Druck und/oder in Abhängigkeit von der gemessenen Menge, ansteuern, insbesondere regeln, um dadurch den Betrieb der Luftpumpe 22 zu variieren.

Bei dem in Fig. 1 gezeigten Ausführungsbeispiel weist die Vorrichtung 10 eine Bedieneinrichtung 40 auf, welche wenigstens ein Bedienelement 42 aufweist. Bei dem in Fig. 1 gezeigten Ausführungsbeispiel umfasst die Bedieneinrichtung 40 mehrere Bedienelemente 42. Das jeweilige Bedienelement 42 ist beispielsweise von einer Person bedienbar, um hierdurch wenigstens eine Eingabe, insbesondere wenigstens zwei oder demgegenüber mehr Eingaben, in die Vorrichtung 10 bewirken, das heißt vornehmen zu können. Dies bedeutet, dass mittels der Bedienelemente 42, das heißt mittels der Bedieneinrichtung 40, die durch die Person bewirkten oder bewirkbaren Eingaben erfasst werden können. Die elektronische Recheneinrichtung 32 kann die Luftpumpe 22 in Abhängigkeit von den Eingaben ansteuern und dadurch den Betrieb der Luftpumpe 22 in Abhängigkeit von den Eingaben variieren, sodass der Milchschaum 26 insbesondere hinsichtlich dessen Menge und/oder Qualität in Abhängigkeit von den Eingaben und somit auf unterschiedliche Arten erzeugt, mithin hergestellt werden kann. Beispielsweise wird dadurch, dass die elektronische Recheneinrichtung 32 die Luftpumpe 22 in Abhängigkeit von einer ersten der Eingaben ansteuert, der Milchschaum 26 mit einer ersten Menge und/oder einer ersten Qualität hergestellt. Mit anderen Worten werden beispielsweise in Abhängigkeit von der ersten Eingabe eine erste Menge und/oder eine erste Qualität des Milchschaums 26 erzeugt, das heißt hergestellt. Beispielsweise wird dadurch, dass die elektronische Recheneinrichtung 32 die Luftpumpe 22 in Abhängigkeit von einer zweiten der Eingaben ansteuert, der Milchschaum 26 mit einer von der ersten Menge unterschiedlichen, zweiten Menge und/oder mit einer von der ersten Qualität unterschiedlichen, zweiten Qualität hergestellt. Mit anderen Worten wird beispielsweise in Abhängigkeit von der zweiten Eingabe eine von der ersten Menge unterschiedliche, zweite Menge und/oder eine von der ersten Qualität unterschiedliche, zweite Qualität des Milchschaums 26 hergestellt. Dadurch kann der Milchschaum 26 automatisiert auf unterschiedliche Arten hergestellt werden.

Im Folgenden wird ein Verfahren zum Betreiben der Vorrichtung 10 beschrieben. Insbesondere ist die Vorrichtung 10 in einem einfach auch als Betriebsmodus, Normalbetriebsmodus oder Normalbetrieb bezeichneten Aufschäummodus betreibbar, in welchem die Vorrichtung 10, wie zuvor beschrieben, den Dampf bereitstellt oder bereitstellen kann. Insbesondere ist es denkbar, dass bei dem Verfahren der Aufschäummodus durchgeführt wird, das heißt, dass bei dem Verfahren die Vorrichtung 10 in dem Aufschäummodus betrieben wird, in welchem, wie zuvor beschrieben, der Dampf erzeugt wird und die Vorrichtung 10 den Dampf bereitstellt, um hierdurch die Milch aufzuschäumen, mithin den Milchschaum zu erzeugen. Beispielsweise kann die Durchführung des Aufschäummodus durch eine durch eine Person bewirkte, erste Bedienung bewirkt, das heißt ausgelöst oder gestartet werden. Mit anderen Worten, wird beispielsweise mittels der Bedieneinrichtung 40 die durch eine Person bewirkte erste Bedienung der Bedieneinrichtung 40 erfasst, so wird in Abhängigkeit von dem Erfassen der ersten Bedienung der Aufschäummodus gestartet, das heißt die Vorrichtung in dem Aufschäummodus betrieben.

Wie im Folgenden noch genauer erläutert wird, ist die Vorrichtung 10 (auch) in einem Entkalkungsmodus betreibbar, welcher beispielsweise durch eine durch eine Person bewirkte, insbesondere von der ersten Bedienung unterschiedliche, zweite Bedienung der Bedieneinrichtung 40 ausgelöst, das heißt gestartet oder aktiviert werden kann, mit anderen Worten, wird beispielsweise mittels der Bedieneinrichtung 40 die von einer Person bewirkte, insbesondere von der ersten Bedienung unterschiedliche, zweite Bedienung erfasst, so wird in Abhängigkeit von dem Erfassen der zweiten Bedienung der Entkalkungsmodus durchgeführt, das heißt die Vorrichtung 10 in dem Entkalkungsmodus betrieben. Bei dem zuvor genannten Verfahren zum Betreiben der Vorrichtung 10 wird die Vorrichtung 10 in dem Entkalkungsmodus betrieben.

Aus Fig. 1 ist erkennbar, dass die Vorrichtung 10 ein zusätzlich zu der Dampfquelle 12 vorgesehenes Behältnis 44 aufweist, in welchem eine Flüssigkeit 46 aufnehmbar oder aufgenommen ist. Auch erkennbar ist, dass die Dampfquelle 12 zusätzlich zu dem Behältnis 44 vorgesehen ist. Erkennbar ist, dass die Dampfquelle 12 außerhalb des Behältnisses 14 angeordnet ist, und das Behältnis 44 ist außerhalb der Dampfquelle 12 angeordnet.

Die Vorrichtung 10 weist auch eine auch als Flüssigkeitspumpe bezeichnete Pumpe 48, mittels welcher die Flüssigkeit 46 aus dem Behältnis 44 in die Dampfquelle 12 zu fördern ist, das heißt gefördert werden kann. Dies bedeutet, dass mittels der Pumpe 48 die Flüssigkeit 46 aus dem Behältnis 44 herausgefördert und in die Dampfquelle 12 hineingefördert werden kann. Es ist erkennbar, dass beispielsweise die Pumpe 48 zusätzlich zu der Luftpumpe 22 vorgesehen ist, sodass die Luftpumpe 22 zusätzlich zu der Pumpe 48 vorgesehen ist. Die Pumpe 48 ist beispielsweise außerhalb der Luftpumpe 22 angeordnet, und die Luftpumpe 22 ist beispielsweise außerhalb der Pumpe 48 angeordnet. Beispielsweise ist die Pumpe 48 elektrisch betreibbar, mithin eine elektrisch betreibbare Pumpe 48.

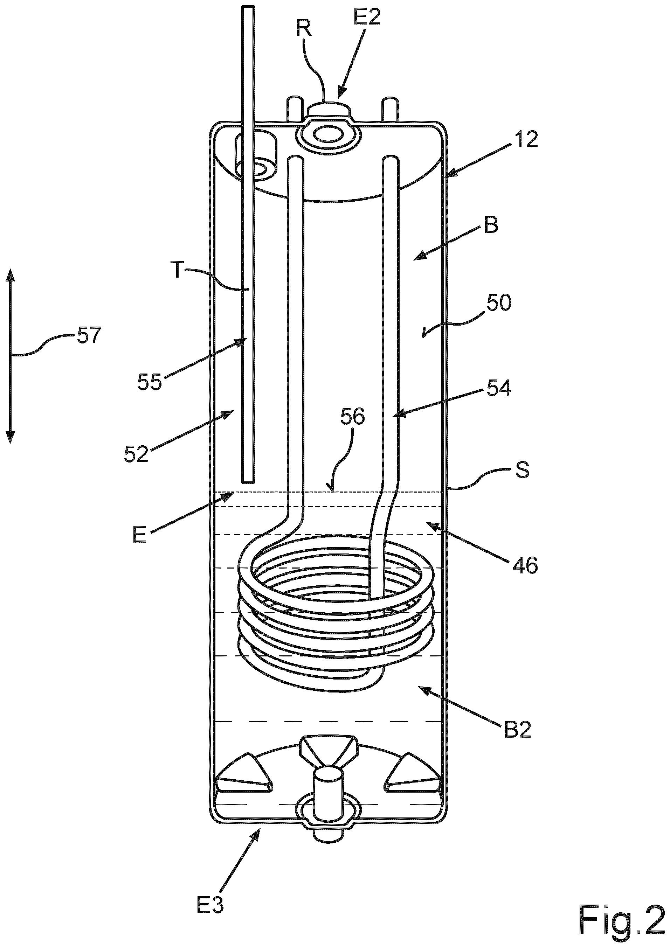

Fig. 2 zeigt die Dampfquelle 12 in einer schematischen Schnittansicht. Die Dampfquelle 12 weist beispielsweise eine innenumfangsseitige Mantelfläche 50 auf, durch welche ein Aufnahmeraum 52 der Dampfquelle 12, insbesondere direkt, begrenzt ist. Somit ist mittels der Pumpe 48 die Flüssigkeit 46 aus dem Behältnis 44 in den Aufnahmeraum 52 und somit in die Dampfquelle 12 hineinförderbar. In Fig. 2 erkennbar ist auch ein insbesondere elektrisches Heizelement 54, welches beispielsweise Bestandteil der Dampfquelle 12 ist. Das Heizelement 54 ist zumindest teilweise in dem Aufnahmeraum 52 und somit in der Dampfquelle 12 angeordnet. Die insbesondere mittels der Pumpe 48 aus dem Behältnis 44 in den Aufnahmeraum 52 und somit in die Dampfquelle 12 hineingeförderte Flüssigkeit ist in Fig. 2 besonders schematisch dargestellt und ebenfalls mit 46 bezeichnet. Es ist erkennbar, dass die Flüssigkeit 46 in dem Aufnahmeraum 52, mithin in der Dampfquelle 12, einen auch als Füllstand oder Spiegel bezeichneten Pegel 56 bildet.

Vorzugsweise wird bei oder in dem Aufschäummodus als die Flüssigkeit 46 Wasser verwendet, aus welchem mittels und in der Dampfquelle 12 der zuvor genannte Wasserdampf erzeugt werden kann, welcher dann von der Dampfquelle 12 bereitgestellt werden kann. Dargestellt in Fig. 2 ist auch ein Erfassungselement 55 der Vorrichtung 10 wobei das Erfassungselement 55 zumindest teilweise in dem Aufnahmeraum 52 und somit in der Dampfquelle 12 angeordnet ist. Bei dem in Fig. 2 gezeigten Ausführungsbeispiel ist das Erfassungselement 55 als eine Elektrode ausgebildet. Ein in dem Aufnahmeraum 52 angeordneter Teil des Erfassungselements 55 ist mit T bezeichnet. Es ist erkennbar, dass das Erfassungselement 55 ein in dem Aufnahmeraum 52 angeordnetes und beispielsweise durch den Teil T gebildetes, freies Ende E aufweist. Mittels des Erfassungselements 55 kann eine Menge der mittels der Pumpe 48 aus dem Behältnis 44 in die Dampfquelle 12, das heißt in den Aufnahmeraum 52 geförderte Menge erfasst werden. Mit zunehmender, mittels der Pumpe 48 aus dem Behältnis 44 in den Aufnahmeraum 52 geförderter Menge der Flüssigkeit 46 steigt der Pegel 56 der Flüssigkeit 46 in dem Aufnahmeraum 52 insbesondere entlang einer durch einen Doppelpfeil 57 veranschaulichten Richtung an. Berühren der Pegel 56 und somit die Flüssigkeit 46 in den Aufnahmeraum 52 das Erfassungselement 55, insbesondere das Ende E, so erfasst hierdurch das Erfassungselement 55 die in den Aufnahmeraum 52 aufgenommene Flüssigkeit 46. Insbesondere ist es vorgesehen, dass in dem Aufschäummodus das Fördern der Flüssigkeit 46 aus dem Behältnis 44 in den Aufnahmeraum 52 mittels der Pumpe 48 dann beendet wird, wenn mittels des Erfassungselements 55 die Flüssigkeit 46 in dem Aufnahmeraum 52 erfasst wird, insbesondere dann, wenn der Pegel 56 beziehungsweise die Flüssigkeit 46 in dem Aufnahmeraum 52 das Ende E berührt. Somit ist es insbesondere in dem Aufschäummodus vorgesehen, dass in dem Aufschäummodus mittels der Pumpe 48 nur eine solch große Menge der Flüssigkeit 46 aus dem Behältnis 44 in den Aufnahmeraum 52 gefördert wird, dass der Pegel 56 insbesondere entlang der Richtung höchstens bis zu einer Stelle S ansteigt, die entlang der Richtung betrachtet von einem Ende E2 der Dampfquelle 12, die an dem Ende E2 endet und an dem Ende E2 einen Rand R aufweist, beabstandet ist. Dies bedeutet, dass in dem Aufschäummodus der Aufnahmeraum 52, mithin die Dampfquelle 12 nicht vollständig mit der Flüssigkeit 46 befüllt wird, sondern in dem Aufschäummodus wird der Aufnahmeraum 52 nur so stark mit der Flüssigkeit 46 befüllt, dass sich insbesondere entlang der Richtung (Doppelpfeil 57) betrachtet an den Pegel 56 ein Bereich B des Aufnahmeraums 52 anschließt, wobei der Bereich B frei von der Flüssigkeit 46 ist, das heißt nicht mit der Flüssigkeit 46 befüllt ist. Wird mittels der Pumpe 48 und insbesondere in dem Aufschäummodus die Flüssigkeit 46 aus dem Behältnis 44 in die Dampfquelle 12, das heißt in den Aufnahmeraum 52 derart gefüllt, dass der Pegel 56 bis zu der Stelle S ansteigt, so befindet sich zumindest ein Teil des Heizelements 54 unterhalb des Pegels 56. Wird dann das Heizelement 54 mit elektrischer Energie versorgt, so wird mittels des Heizelements 54 die Flüssigkeit 46 in dem Aufnahmeraum 52 erwärmt, wodurch aus der Flüssigkeit 46 in dem Aufnahmeraum 52 der Wasserdampf erzeugt wird. Der Wasserdampf kann sich zunächst in dem Bereich B sammeln und daraufhin aus dem Bereich B und aus der Dampfquelle 12 abgeführt werden, wodurch die Dampfquelle 12 den Wasserdampf bereitstellen kann.

Um nun die Dampfquelle 12 besonders zeit- und kostengünstig und insbesondere (auch) in dem Bereich B entkalken zu können, ohne die Vorrichtung 10 auseinanderbauen zu müssen, wird, insbesondere in Abhängigkeit von dem Erfassen der zweiten Bedienung, die Vorrichtung 10 bei dem Verfahren in dem Entkalkungsmodus betrieben. In dem Entkalkungsmodus wird mittels der Pumpe 48 die Flüssigkeit 46 aus dem Behältnis 44 derart gezielt in die Dampfquelle 12, das heißt in den Aufnahmeraum 52 gefördert, dass die Dampfquelle 12, mithin der Aufnahmeraum 52 vollständig und somit bis zu dem Rand R beziehungsweise bis zu dem Ende E2 mit der Flüssigkeit 46 befüllt wird. Somit steigt in dem Entkalkungsmodus der Pegel 56 über das Ende E und den Teil T an, wobei insbesondere der Pegel 56 bis zu dem Rand R, das heißt bis zu dem Ende E2 ansteigt. Insbesondere ist es vorgesehen, dass in dem Entkalkungsmodus mittels der Pumpe 48 die Flüssigkeit 46 aus dem Behältnis 44 in die Dampfquelle 12, das heißt in den Aufnahmeraum 52, derart gezielt gefördert, dass die Dampfquelle 12, das heißt der Aufnahmeraum 52 mit der Flüssigkeit 46 überfüllt wird, sodass die mittels der Pumpe 48 in die Dampfquelle 12 geförderte Flüssigkeit 46 den Rand R übertritt und somit über den Rand R strömt und dadurch aus der Dampfquelle 12 herausströmt. Hierdurch kann sichergestellt werden, dass die Dampfquelle 12 vollständig mit der Flüssigkeit 46 befüllt wird.

Vorzugsweise wird in dem Entkalkungsmodus als die Flüssigkeit 46 ein Entkalker verwendet, welcher dazu ausgebildet ist, Kalk aufzulösen, sodass mittels des Entkalkers Kalk, der sich gegebenenfalls innenseitig an der Dampfquelle 12, das heißt an der innenumfangsseitigen Mantelfläche 50 angelagert hat, zumindest teilweise aufgelöst und somit zumindest teilweise von der innenumfangsseitigen Mantelfläche 50 gelöst werden kann.

Vorzugsweise ist es vorgesehen, dass in dem Entkalkungsmodus nach dem vollständigen Befüllen oder Überfüllen der Dampfquelle 12 mit der Flüssigkeit 46 der Aufnahmeraum 52, das heißt die Dampfquelle 12 im Hinblick auf die Flüssigkeit 46 vollständig entleert wird, um hierdurch beispielsweise den Entkalker aus der Dampfquelle 12 zu entfernen.

Hintergrund des Verfahrens ist insbesondere Folgender: Wird die beispielsweise als Boiler ausgebildete Dampfquelle 12 grundsätzlich nur bis zu der Stelle S, an welcher beispielsweise das Ende E angeordnet ist, mit der Flüssigkeit 46 befüllt, so kann beispielsweise auch nur ein sich entlang der Richtung von der Stelle S und von dem Ende E2 wegerstreckender und sich zu bis zu einem zweiten Ende E3 der Dampfquelle 12 erstreckender, zweiter Bereich B2 des Aufnahmeraums 52 und somit der Dampfquelle 12 entkalkt werden. Es ist erkennbar, dass die Enden E2 und E3 der Dampfquelle 12 beziehungsweise des Aufnahmeraums 52 entlang der Richtung (Doppelpfeil 57) einander gegenüberliegen. Der Bereich B könnte dann nicht oder nicht effektiv entkalkt werden. Dies ist nun jedoch durch den Entkalkungsmodus möglich.

Bei herkömmlichen Lösungen ist es vorgesehen, dass die Dampfquelle 12 immer nur, das heißt in jedem Betriebsmodus der Vorrichtung 12 bis zu der Stelle S und somit bis zu dem Ende E, das heißt bis zu der Elektrode mit der Flüssigkeit 46 gefüllt wird, was beispielsweise aus Logik- oder Steuerungsgründen der Fall sein kann. In der Folge müsste, um die Dampfquelle 12 vorteilhaft entkalken zu können, die Vorrichtung 10 auseinandergebaut werden. Dies kann nun durch das Verfahren vermieden werden, da in dem Entkalkungsmodus die Dampfquelle 12 vollständig mit der Flüssigkeit 46 befüllt oder vorzugsweise sogar überfüllt wird. Somit ist ein vollständiges Entkalken der Dampfquelle 12 insbesondere in ihrem Inneren möglich.

Vorzugsweise ist der Entkalkungsmodus ein automatisches Entkalkungsprogramm, welches insbesondere nach seiner Aktivierung, das heißt nach seinem Start automatisch durchgeführt wird. Somit kann die Dampfquelle 12 umfangreich und zeit- und kostengünstig entkalkt werden.

Der Rand R ist beispielsweise eine auch als Oberkante bezeichnete Kante oder durch eine beispielsweise auch als Oberkante bezeichnete Kante der Dampfquelle 12 gebildet, wobei die Flüssigkeit 46 in dem Entkalkungsmodus zumindest bis zu der Kante und vorzugsweise auch darüber hinaus ansteigt, sodass die Dampfquelle 12 mit der Flüssigkeit 46 zumindest vollständig befüllt oder gar überfüllt wird.

Löst in dem Entkalkungsmodus der Entkalker den Kalk von der innenumfangsseitigen Mantelfläche 50, wobei beispielsweise der Kalk in dem Entkalker aufgelöst wird, so kann in dem Aufnahmeraum 52 durch eine chemische Reaktion Kohlendioxid entstehen, das in der Dampfquelle 12 und dabei insbesondere entlang der Richtung nach oben steigen und beispielsweise die Flüssigkeit 46 aus der Dampfquelle 12 austreiben kann. Um dabei eine vollständige Befüllung der Dampfquelle 12 mit der Flüssigkeit 46 sicherzustellen, wird beispielsweise in dem Entkalkungsmodus die Dampfquelle 12 mehrmals zeitlich aufeinanderfolgend mit der Flüssigkeit 46 vollständig befüllt oder überfüllt. Mit anderen Worten werden beispielsweise in dem Entkalkungsmodus mehrere und somit wenigstens oder genau zwei gegenüber zwei mehr Befüllvorgänge durchgeführt, wobei die Befüllvorgänge vorzugsweise zeitlich voneinander beabstandet sind. Dies bedeutet, dass ein erster der Befüllvorgänge zu einem ersten Beginnzeitpunkt beginnt und zu einem ersten Endzeitpunkt endet, und ein zweiter der Befüllvorgänge beginnt zu einem zweiten Beginnzeitpunkt und endet zu einem zweiten Endzeitpunkt, wobei sich der zweite Befüllvorgang zeitlich an den ersten Befüllvorgang anschließt und wobei vorzugsweise der erste Endzeitpunkt und der zweite Beginnzeitpunkt zeitlich voneinander beabstandet sind. Zwischen dem ersten Endzeitpunkt und dem zweiten Beginnzeitpunkt liegt beispielsweise eine auch als Haltephase bezeichnete Wartephase, während welcher beispielsweise durchgängig, das heißt unterbrechungsfrei und somit vollständig ein mittels der Pumpe 48 bewirktes Fördern der Flüssigkeit 46 aus dem Behältnis 44 in den Aufnahmeraum 52, das heißt in die Dampfquelle 12 unterbleibt. Bei dem jeweiligen Befüllvorgang wird der Aufnahmeraum 52, das heißt die Dampfquelle 12 vollständig mit der Flüssigkeit 46 befüllt oder gar überfüllt. Während der Haltephase kann, wie zuvor beschrieben, im Aufnahmeraum 52 Kohlendioxid entstehen, welches zumindest ein Teil der in der Dampfquelle 12 aufgenommenen Flüssigkeit 46 aus der Dampfquelle 12 austreiben und somit entfernen kann. Somit kann es in der Haltephase dazu kommen, dass innerhalb der Haltephase die Dampfquelle 12 nicht mehr vollständig mit der Flüssigkeit 46 befüllt ist. Da sich jedoch an die Haltephase der zweite Befüllvorgang anschließt, wird bei dem zweiten Befüllvorgang die Dampfquelle 12 (wieder) vollständig mit der Flüssigkeit 46 befüllt, wodurch die Dampfquelle 12 vorteilhaft entkalkt werden kann.

Um die Dampfquelle 12 sicher vollständig mit der Flüssigkeit 46 befüllen oder gar überfüllen zu können, weist die Vorrichtung 10 beispielsweise einen auch als Flowmeter oder Flowsensor bezeichneten Durchflusssensor 58 auf, mittels welchem beispielsweise dann, während die Pumpe 48 in dem Entkalkungsmodus und insbesondere bei dem jeweiligen Befüllvorgang die Flüssigkeit 46 aus dem Behältnis 44 in die Dampfquelle 12 fördert, eine Messgröße wie beispielsweise ein Volumenstrom oder Massenstrom der mittels der Pumpe 48 in dem Entkalkungsmodus geförderten und von dem Behältnis 44 zu der und in die Dampfquelle 12 strömenden Flüssigkeit 46 erfasst, das heißt gemessen wird. Dabei wird in dem Entkalkungsmodus und insbesondere bei oder in dem jeweiligen Befüllvorgang mittels der Pumpe 48 die Flüssigkeit 46 aus dem Behältnis 44 in die Dampfquelle 12 in Abhängigkeit von der mittels des Durchflusssensors 58 gemessenen Messgröße derart gezielt gefördert, dass die Dampfquelle 12 vollständig mit der Flüssigkeit 46 befüllt oder überfüllt wird.

Ein insbesondere gezieltes Abführen oder Ablassen der Flüssigkeit 46 aus der Dampfquelle 12 insbesondere nach dem vollständigen Befüllen der Dampfquelle 12 mit der Flüssigkeit 46 erfolgt beispielsweise dadurch, dass in dem Entkalkungsmodus und dabei insbesondere in bei einem sich beispielsweise zeitlich an den zweiten Befüllvorgang anschließenden Austreibvorgang die Flüssigkeit 46 in der Dampfquelle 12 mittels des Heizelements 54 auf über 100 Grad Celsius und dabei beispielsweise auf zumindest oder genau 120 Grad Celsius erwärmt, das heißt erhitzt wird, wodurch aus der Flüssigkeit 46 in der Dampfquelle 12 Dampf mit einem Dampfdruck erzeugt wird, mittels welchem die Flüssigkeit 46 über wenigstens oder genau eine Öffnung der Dampfquelle 12 aus der Dampfquelle 12 ausgetrieben und somit abgeführt wird. Ein Abpumpen der Flüssigkeit 46 aus der Dampfquelle 12 mittels einer gesonderten Entleerungspumpe und somit eine solche Entleerungspumpe selbst können somit vermieden werden. Somit kann die Dampfquelle 12 zeit- und kostengünstig entkalkt werden.

## Patentansprüche

1. Verfahren zum Betreiben einer Vorrichtung (10) zum Aufschäumen von Milch (20), bei welchem die Vorrichtung (20) aufweist:
- eine Dampfquelle (12) zum Bereitstellen von Dampf zum Aufschäumen der Milch (29);
- ein zusätzlich zu der Dampfquelle (12) vorgesehenes Behältnis (44) zum Aufnehmen einer Flüssigkeit (46); und
- eine Pumpe (48), mittels welcher die Flüssigkeit (46) aus dem Behältnis (44) in die Dampfquelle (12) zu fördern ist; und
**dadurch gekennzeichnet, dass**
die Vorrichtung (10) in einem Entkalkungsmodus betrieben wird, in welchem mittels der Pumpe (48) die Flüssigkeit (46) aus dem Behältnis (44) in die Dampfquelle (12) derart gezielt gefördert wird, dass die Dampfquelle (12) vollständig mit der Flüssigkeit (46) befüllt wird.

2. Verfahren nach Anspruch 1,
**dadurch gekennzeichnet, dass**
in dem Entkalkungsmodus mittels der Pumpe (48) die Flüssigkeit (46) aus dem Behältnis (44) in die Dampfquelle (12) mehrmals aufeinanderfolgend derart gezielt gefördert wird, dass die Dampfquelle (12) mehrmals aufeinanderfolgend vollständig mit der Flüssigkeit (46) befüllt wird.

3. Verfahren nach Anspruch 1 oder 2,
**dadurch gekennzeichnet, dass**
in dem Entkalkungsmodus mittels der Pumpe (48) die Flüssigkeit (46) aus dem Behältnis (44) in die Dampfquelle (12) derart gezielt gefördert wird, dass die Dampfquelle (12) mit der Flüssigkeit (46) überfüllt wird.

4. Verfahren nach Anspruch 3,
**dadurch gekennzeichnet, dass**
in dem Entkalkungsmodus mittels der Pumpe (48) die Flüssigkeit (46) aus dem Behältnis (44) in die Dampfquelle (12) mehrmals aufeinanderfolgend derart gezielt gefördert wird, dass die Dampfquelle (12) mit der Flüssigkeit (46) mehrmals aufeinanderfolgend überfüllt wird.

5. Verfahren nach einem der vorhergehenden Ansprüche,
**dadurch gekennzeichnet, dass**
in wenigstens einem von dem Entkalkungsmodus unterschiedlichen und zum Bereitstellen des Dampfes vorgesehenen Betriebsmodus der Vorrichtung (10), insbesondere in allen von dem Entkalkungsmodus unterschiedlichen und zum Bereitstellen des Dampfes vorgesehenen Betriebsmodi der Vorrichtung (10), ein mittels der Pumpe (48) gezielt bewirktes, derartiges Fördern von Flüssigkeit (46) aus dem Behältnis (44) in die Dampfquelle (12) unterbleibt, dass die Dampfquelle (12) mit der Flüssigkeit (46) aus dem Behältnis (44) vollständig befüllt wird.

6. Verfahren nach einem der vorhergehenden Ansprüche,
**dadurch gekennzeichnet, dass**
die Vorrichtung (10) wenigstens ein Erfassungselement (55) zum Erfassen einer Menge der mittels der Pumpe (48) aus dem Behältnis (44) in die Dampfquelle (12) geförderten und in der Dampfquelle (12) aufgenommenen Flüssigkeit (46) aufweist, wobei in dem Entkalkungsmodus mittels der Pumpe (48) die Flüssigkeit (46) aus dem Behältnis (44) in die Dampfquelle (12) derart gezielt gefördert wird, dass ein durch die mittels der Pumpe (48) aus dem Behältnis (44) in die Dampfquelle (12) geförderte Flüssigkeit (46) gebildeter Pegel (56) der Flüssigkeit (46) in der Dampfquelle (12) über zumindest einen Teil (T) des Erfassungselements (55) hinweg ansteigt und die Dampfquelle (12) vollständig mit der Flüssigkeit (46) befüllt wird.

7. Verfahren nach einem der vorhergehenden Ansprüche,
**dadurch gekennzeichnet, dass**
in dem Entkalkungsmodus:
- während die Pumpe (48) die Flüssigkeit (46) aus dem Behältnis (44) in Dampfquelle (12) fördert, mittels eines Durchflusssensors (58) eine Messgröße erfasst wird, welche eine mittels der Pumpe (48) bewirkte und von dem Behältnis (44) zur Dampfquelle (12) verlaufende Strömung der aus dem Behältnis (44) in die Dampfquelle (12) strömenden Flüssigkeit (46) charakterisiert.; und
- mittels der Pumpe (48) die Flüssigkeit (46) aus dem Behältnis (44) in die Dampfquelle (12) in Abhängigkeit von der mittels des Durchflusssensors (58) erfassten Messgröße derart gezielt gefördert wird, dass die Dampfquelle (12) vollständig mit der Flüssigkeit (46) befüllt wird.

8. Verfahren nach Anspruch 6 und einem der Ansprüche 1 bis 5,
**dadurch gekennzeichnet, dass**
in dem Entkalkungsmodus ab einem Zeitpunkt, zu welchem der Pegel (56) der Flüssigkeit (46) in der Dampfquelle (12) auf gleicher Höhe wie der Teil (T) des Erfassungselements (55) ist und hierdurch das Erfassungselement (55) den Pegel (56) der Flüssigkeit (46) in der Dampfquelle (12) erfasst, die Pumpe (48) noch eine vorgegebene Zeitspanne betrieben wird, wodurch mittels der Pumpe (48) die Flüssigkeit (46) während der Zeitspanne aus dem Behältnis (44) in die Dampfquelle (12) gefördert wird und der Pegel (56) zumindest über den Teil (T) des Erfassungselements (55) hinweg ansteigt.

9. Verfahren nach Anspruch 8,
**dadurch gekennzeichnet, dass**
in dem Entkalkungsmodus die Pumpe (48) die Flüssigkeit (46) aus dem Behältnis (44) in die Dampfquelle (12) fördert, ohne dass mittels eines Durchflusssensors (58) eine Messgröße erfasst wird, welche eine mittels der Pumpe (48) bewirkte Strömung der aus dem Behältnis (44) in die Dampfquelle (12) strömenden Flüssigkeit (46) charakterisiert.

10. Verfahren nach Anspruch 8 oder 9,
**dadurch gekennzeichnet, dass**
die Zeitspanne in einem Datenspeicher einer elektronischen Recheneinrichtung gespeichert ist.

11. Verfahren nach einem der Ansprüche 8 bis 10,
**dadurch gekennzeichnet, dass**
die Zeitspanne für jede Durchführung des Entkalkungsmodus konstant ist.

12. Verfahren nach einem der vorhergehenden Ansprüche,
**dadurch gekennzeichnet, dass**
nachdem die Dampfquelle (12) in dem Entkalkungsmodus vollständig mit der Flüssigkeit (46) befüllt wurde, in dem Entkalkungsmodus die Flüssigkeit (46) aus der Dampfquelle (12) abgeführt wird, wodurch in dem Entkalkungsmodus die Dampfquelle (12) zumindest überwiegend, insbesondere vollständig, entleert wird, woraufhin in dem Entkalkungsmodus mittels der Pumpe (48) die Flüssigkeit (46) oder eine andere Flüssigkeit aus dem Behältnis (44) in die Dampfquelle (12) derart gezielt gefördert wird, dass die Dampfquelle (12) vollständig mit der Flüssigkeit (46) oder der anderen Flüssigkeit befüllt wird.

13. Verfahren nach Anspruch 12,
**dadurch gekennzeichnet, dass**
nachdem die Dampfquelle (12) in dem Entkalkungsmodus vollständig mit der Flüssigkeit (46) oder der anderen Flüssigkeit befüllt wurde, in dem Entkalkungsmodus die Flüssigkeit (46) oder die andere Flüssigkeit derart aus der Dampfquelle (12) abgeführt wird, dass die Flüssigkeit oder die andere Flüssigkeit in der Dampfquelle auf über 100 Grad Celsius erwärmt wird, wodurch aus der Flüssigkeit (46) oder der anderen Flüssigkeit in der Dampfquelle (12) Dampf mit einem Dampfdruck erzeugt wird, mittels welchem die Flüssigkeit (46) oder die andere Flüssigkeit über wenigstens oder genau eine Öffnung der Dampfquelle (12) aus der Dampfquelle (12) ausgetrieben wird.

14. Verfahren nach einem der vorhergehenden Ansprüche,
**dadurch gekennzeichnet, dass**
die Vorrichtung (10) als ein Bestandteil eines Getränkebereiters, insbesondere eines Heißgetränkebereiters und ganz insbesondere einer Kaffeemaschine, betrieben wird.

15. Vorrichtung (10) zum Aufschäumen von Milch (20), wobei die Vorrichtung (10) zum Durchführen eines Verfahrens nach einem der vorhergehenden Ansprüche ausgebildet ist.
